# EUROPÄISCHE PATENTSCHRIFT

(11) **EP 0 672 727 B1**
(45) Veröffentlichungstag und Bekanntmachung des Hinweises auf die Patenterteilung: **29.12.1999**
(21) Anmeldenummer: 95810142.0
(22) Anmeldetag: 06.03.1995
(51) Int. Cl.: C09B 1/30, C09B 6/00

(54) **Anthrachinonfarbstoffe, Verfahren zu deren Herstellung und deren Verwendung**
Anthraquinone dyes, process for their preparation and the use thereof
Colorants anthraquinones, procédé pour leur préparation et leur utilisation

(30) Priorität: 14.03.1994 CH 74394
(43) Veröffentlichungstag der Anmeldung: 20.09.1995
(73) Patentinhaber: Ciba Specialty Chemicals Holding Inc., 4057 Basel (CH)
(72) Erfinder: Lehmann, Urs, Dr., CH-4052 Basel (CH); Frick, Marcel, CH-4153 Reinach (CH)

(56) Entgegenhaltungen:
- FR-A- 2 017 873
- GB-A- 749 068
- US-A- 3 121 755

## Beschreibung

Die vorliegende Erfindung betrifft neue Anthrachinonfarbstoffe, Verfahren zu deren Herstellung und die Verwendung dieser Farbstoffe zum Färben oder Bedrucken von Fasermaterialien, insbesondere textilen Fasermaterialien.

Gegenstand der vorliegenden Erfindung sind Anthrachinonfarbstoffe der Formel 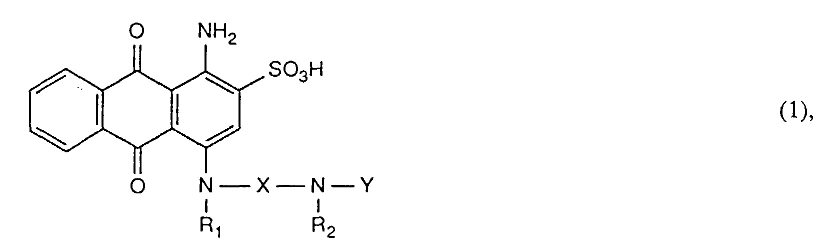 worin
R₁ und R₂ unabhängig voneinander Wasserstoff oder C₁-C₄-Alkyl sind,
X ein C₂-C₂₂-Alkylenrest ist, welcher durch 1, 2 oder 3 Glieder aus der Gruppe -NH-, -N(CH₃)- oder -O- unterbrochen ist und unsubstituiert oder durch Hydroxyl, Sulfo oder Sulfato substituiert ist; oder
ein Rest der Formel -CH₂-C(CH₃)₂-CH₂-; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylen-C₁-C₄-alkylenrest ist, und
Y ein Rest der Formel 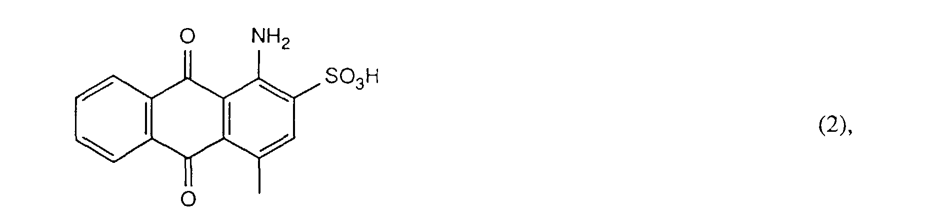 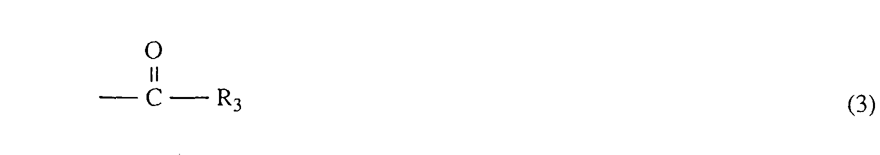 oder

   ―SO₂―R₄ (4)

   ist, wobei R₃ und R₄ unabhängig voneinander C₁-C₄-Alkyl oder gegebenenfalls substituiertes Phenyl oder Naphthyl bedeuten.

In der GB-A-0 749 068 und der FR-A-2 017 873 werden Anthrachinonfarbstoffe offenbart, die sich von den Anthrachinonfarbstoffen der Formel (1) der vorliegenden Erfindung hinsichtlich des Brückenglieds X unterscheiden.

Als C₁-C₄-Alkyl kommen für R₁, R₂, R₃ und R₄ unabhängig voneinander Methyl, Äthyl, Propyl, Isopropyl, Butyl, sek.-Butyl, tert.-Butyl oder Isobutyl, insbesondere Methyl oder Aethyl, vorzugsweise Methyl, in Betracht.

Die Reste R₃ und R₄ in der Bedeutung als Phenyl oder Naphthyl können unsubstituiert oder beispielsweise durch C₁-C₄-Alkyl, wie Methyl, Äthyl, Propyl, Isopropyl, Butyl, sek.-Butyl, tert.-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, Sulfo oder Carboxy substituiert sein.

Als wie oben angegeben unterbrochene C₂-C₂₂-Alkylenreste kommen für X vorzugsweise entsprechende C₄-C₁₂-Alkylenreste, insbesondere entsprechende C₄-C₁₀-Alkylenreste, in Betracht. Die genannten Akylenreste sind durch 1, 2 oder 3 Glieder aus der Gruppe -NH-, -N(CH₃)- oder -O-, insbesondere durch 1 oder 2 Glieder -O-, unterbrochen. Weiterhin können die genannten Alkylenreste unsubstituiert oder wie oben angegeben substituiert sein, vorzugsweise sind sie unsubstituiert.

Die für X genannten C₁-C₄-Alkylen-phenylen-C₁-C₄-alkylenreste können in den Phenylenringen unsubstituiert oder durch C₁-C₄-Alkyl, wie Methyl, Äthyl, Propyl, Isopropyl, Butyl, sek.-Butyl, tert.-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, Sulfo oder Carboxy substituiert sein, vorzugsweise sind sie unsubstituiert. Bei den in diesen Brückengliedem X vorhandenen C₁-C₄-Alkylenresten handelt es sich vorzugsweise um Methylenreste. Von besonderer Bedeutung sind hierbei insbesondere Methylen-phenylen-methylenreste.

Die Alkylenreste der für X genannten C₁-C₄-Alkylen-phenylen-C₁-C₄-alkylenreste stehen bevorzugt in meta-Stel!ung zueinander.

Als Beispiele für Brückenglieder X seien die folgenden Reste genannt:
-CH₂-C(CH₃)₂-CH₂-, -(CH₂)₂-O-(CH₂)₂-O-(CH₂)₂-, -(CH₂)₃-O-(CH₂)₄-O-(CH₂)₃-, -(CH₂)₃-N(CH₃)-(CH₂)₃-,

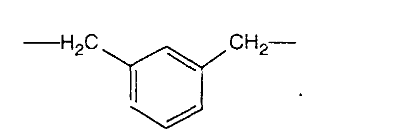

Bevorzugt ist das Brückenglied X ein C₄-C₁₂-Alkylenrest, welcher durch 1, 2 oder 3 Glieder aus der Gruppe -NH-, -N(CH₃)- oder -O- unterbrochen ist; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylen-C₁-C₄-alkylenrest. Als C₁-C₄-Alkylen-phenylen-C₁-C₄-alkylenrest ist hierbei der Methylen-phenylen-methylenrest bevorzugt, wobei dieser wie angegeben substituiert sein kann. Vorzugsweise ist dieser Rest unsubstituiert.

Besonders bevorzugt ist das Brückenglied X ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylen-C₁-C₄-alkylenrest. Als C₁-C₄-Alkylen-phenylen-C₁-C₄-alkylenrest ist hierbei der Methylen-phenylen-methylenrest bevorzugt, wobei dieser wie angegeben substituiert sein kann. Vorzugsweise ist dieser Rest unsubstituiert.

R₁ und R₂ sind bevorzugt Wasserstoff.

R₃ und R₄ sind bevorzugt unabhängig voneinander C₁-C₄-Alkyl oder gegebenenfalls durch C₁-C₄-Alkyl, C₁-C₄-Alkoxy, C₂-C₄-Alkanoylamino, Sulfo, Halogen oder Carboxy substituiertes Phenyl.

Besonders bevorzugt sind R₃ und R₄ gegebenenfalls durch C₁-C₄-Alkyl, C₁-C₄-Alkoxy, C₂-C₄-Alkanoylamino, Sulfo, Halogen oder Carboxy substituiertes Phenyl, insbesondere gegebenenfalls durch C₁-C₄-Alkyl substituiertes Phenyl.

Bei dem Rest Y handelt es sich bevorzugt um einen Rest der Forrnel (2) oder (4), insbesondere um einen Rest der Formel (2).

Besonders bevorzugt sind Anthrachinonfarbstoffe der Formel (1), worin R₁ und R₂ Wasserstoff sind,
Y ein Rest der Formel (2) ist und
X ein C₄-C₁₂-Alkylenrest ist, welcher durch 1, 2 oder 3 Glieder aus der Gruppe -NH-, -N(CH₃)- oder -O- unterbrochen ist, oder
   ein gegebenenfalls im Phenylenring durch C₁-C₄-Alkyl, C₁-C₄-Alkoxy, C₂-C₄-Alkanoylamino, Sulfo, Halogen oder Carboxy substituierter Methylen-phenylen-methylenrest ist.

Ganz besonders bevorzugt sind Anthrachinonfarbstoffe der Formel (1), worin
R₁ und R₂ Wasserstoff sind,
Y ein Rest der Formel (2) und
X ein Methylen-phenylen-methylenrest ist.

Gegenstand der Erfindung ist ferner ein Verfahren zur Herstellung der Anthrachinonfarbstoffe der Formel (1), welches dadurch gekennzeichnet ist, dass man eine Verbindung der Formel 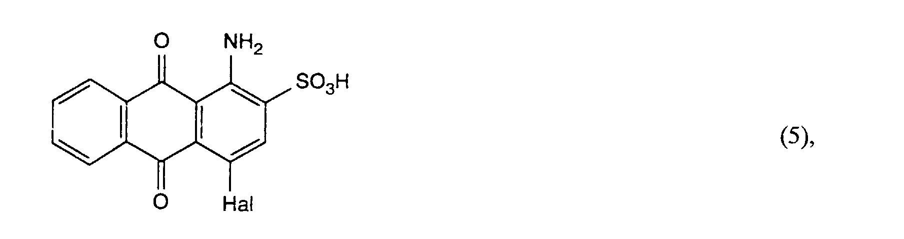 worin Hal Halogen, insbesondere Brom, bedeutet, mit einem Amin der Formel 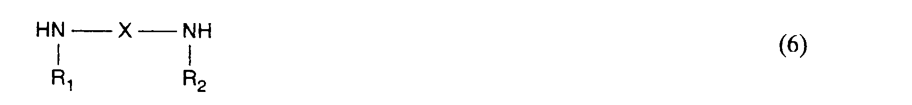 umsetzt, und, falls Y ein Rest der Formel (3) oder (4) ist, das erhaltene Produkt anschliessend mit einer den Rest der Formel (3) oder (4) einführenden Verbindung umsetzt, wobei R₁, R₂, X und Y die unter Formel (1) angegebenen Bedeutungen haben.

Die Umsetzung der Verbindung der Formel (5) mit einem Amin der Formel (6) findet vorzugsweise in wässrigem Medium bei einer Temperatur von z.B. 25 bis 100°C, insbesondere 50 bis 90°C, in an sich bekannter Weise in Gegenwart eines Katalysators, wie z.B. Kupfer(I)-chlorid, statt.

Zur Einführung von Resten der Formel (3) oder (4) können beispielsweise Verbindungen der Formel 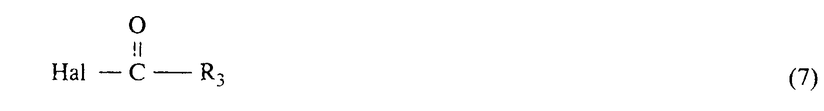 oder

Hal ― SO₂―R₄ (8),

worin Hal Halogen, wie z.B. Chlor, bedeutet und R₃ und R₄ die unter Formel (1) angegebenen Bedeutungen haben, verwendet werden. Für die Einführung von Resten der Formel (3), worin R₃ Methyl bedeutet, kommt insbesondere Essigsäureanhydrid in Betracht. Für die Einführung von Resten der Formel (3), worin R₃ Aethyl bedeutet, kommt insbesondere Propionsäureanhydrid in Betracht.

Die Einführung der Reste der oben genannten Formeln (3) und (4) kann in an sich bekannter Weise z.B. in dipolaren aprotischen Lösungsmitteln, wie z.B. Aceton, Dimethylformamid oder Dimethylsulfoxid, in wässrigem Medium oder in einer Mischung von Wasser mit einem dipolaren aprotischen Lösungsmittel erfolgen, bei einer Temperatur von beispielsweise 40 bis 100°C und einem pH-Wert von z.B. 7 bis 12.

Für die Herstellung von Anthrachinonfarbstoffen der Formel (1), worin Y ein Rest der Formel (2) ist, werden die Verbindungen der Formeln (5) und (6) in der Regel in einem molaren Verhältnis von ungefähr 2:1 eingesetzt.

Für die Herstellung von Anthrachinonfarbstoffen der Formel (1), worin Y ein Rest der Formel (3) oder (4) ist, wird zunächst üblicherweise ein Ueberschuss der Verbindung der Formel (6) eingesetzt; beispielsweise ein molares Verhältnis der Verbindung der Formel (5) zu der Verbindung der Formel (6) von 1:4 bis 1:8. insbesondere 1:5 bis 1:7. Das so erhaltene Zwischenprodukt wird dann in der Regel isoliert, z.B. durch Aussalzen oder Ansäuern, und anschliessend mit einer den Rest der Formel (3) oder (4) einführenden Verbindung umgesetzt.

Für die Reste R₁, R₂, R₃, R₄, X und Y in den Verbindungen der Formeln (6), (7) und (8) gelten die oben genannten Bedeutungen und Bevorzugungen.

Die Verbindungen der Formeln (5), (6), (7) und (8) sind bekannt oder können in Analogie zu bekannten Verbindungen hergestellt werden.

Die Anthrachinonfarbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt, wobei die Natriumsalze, Lithiumsalze oder Natrium/Lithium-Mischsalze von besonderem Interesse sind.

Die erfindungsgemässen Anthrachinonfarbstoffe der Forrnel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide, synthetischen Polyamiden und natürlichen Polyamiden, insbesondere von Wolle oder synthetischem Polyamid. Bevorzugt ist das Färben oder Bedrucken von synthetischen oder natürlichen Polyamidfasermaterialien, insbesondere von Wolle oder synthetischem Polyamid. Das oben genannte Textilmaterial kann in den verschiedensten Verarbeitungsformen vorliegen, wie z.B. als Faser, Gam, Gewebe oder Gewirke. Die erfindungsgemässen Anthrachinonfarbstoffe der Formel (1) können in allgemein üblicher, gegebenenfalls zuvor aufbereiteter Form zum Färben oder Bedrucken verwendet werden. Man erhält egale Färbungen mit brillanten Nuancen und guten Allgemeinechtheiten, insbesondere guter Reib-, Nass-, Nassreib- und Lichtechtheit. Ferner sind die erfindungsgemässen Anthrachinonfarbstoffe gut wasserlöslich. Weiterhin zeigen die erfindungsgemässen Anthrachinonfarbstoffe ein gutes Aufbauvermögen und sind gut mit anderen Farbstoffen kombinierbar.

In den folgenden Beispielen stehen Tei!e für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 25,54 Teile Neopentyldiamin werden in 350 Teilen Wasser bei einer Temperatur von 50°C gelöst und mit 1,25 Teilen Kupfer(I)-chlorid, 21 Teilen Lithiumhydroxid-Monohydrat und 191 Teilen des Natriumsalzes von 1-Amino-4-Bromanthrachinon-2-sulfonsäure versetzt. Die erhaltene Suspension wird auf eine Temperatur von 70°C erwärmt und nach Zugabe von 200 Teilen Wasser ca. 4 Stunden bei dieser Temperatur gerührt. Anschliessend werden 0,5 Teile Kupfer(I)-chlorid zugegeben und es wird ca. 2 Stunden bei einer Temperatur von 80°C gerührt. Der pH wird durch Zugabe von Salzsäure (32%) auf einen Wert von ca. 7,6 gestellt, die Reaktionsmischung auf Raumtemperatur abgekühit und über Nacht stehen gelassen. Danach wird 30 Minuten bei Raumtemperatur und einem pH-Wert von 8 gerührt und die Reaktionsmischung durch Zugabe von Salzsäure (32%) auf einen pH-Wert von 3,8 gestellt. Das auskristallisierte Reaktionsprodukt wird abgenutscht und im Vakuum bei einer Temperatur von 55°C getrocknet. Man erhält ein Natrium/Lithium-Mischsalz eines Farbstoffes, der in Form der freien Säure der Verbindung der Formel 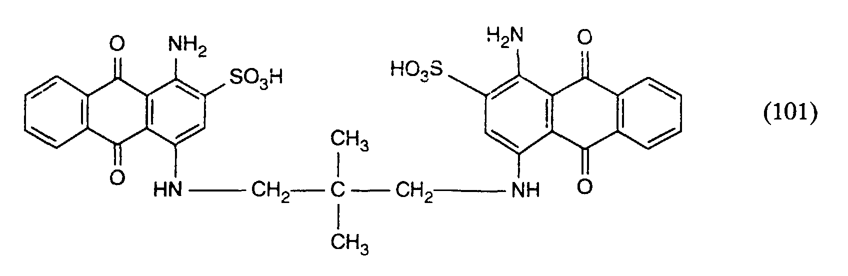 entspricht. Der erhaltene Farbstoff der Formel (101) färbt Wolle und synthetisches Polyamidfasermaterial in blauen Farbtönen.

Beispiele 2 bis 5: Verfährt man wie in Beispiel 1 angegeben, verwendet jedoch anstelle von 25,54 Teilen Neopentyldiamin eine äquimolare Menge eines Diamins der Formel

NH₂-X-NH₂ (102),

worin X die in der folgenden Tabelle 1 in Spalte 2 angegebenen Bedeutungen hat, so erhält man analoge Farbstoffe der allgemeinen Formel 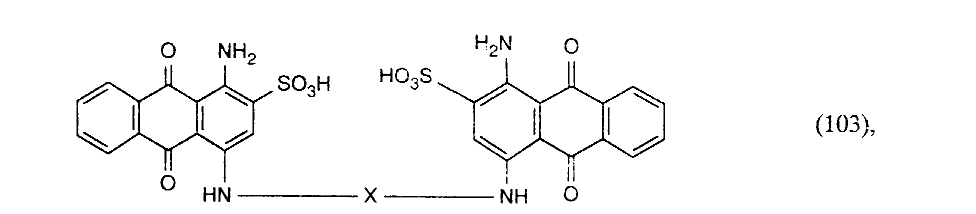 worin X die in der folgenden Tabelle 1 in Spalte 2 angegebenen Bedeutungen hat.

Die in Tabelle 1 angegebenen Farbstoffe färben Wolle und synthetisches Polyamidfasermaterial in blauen Farbtönen.

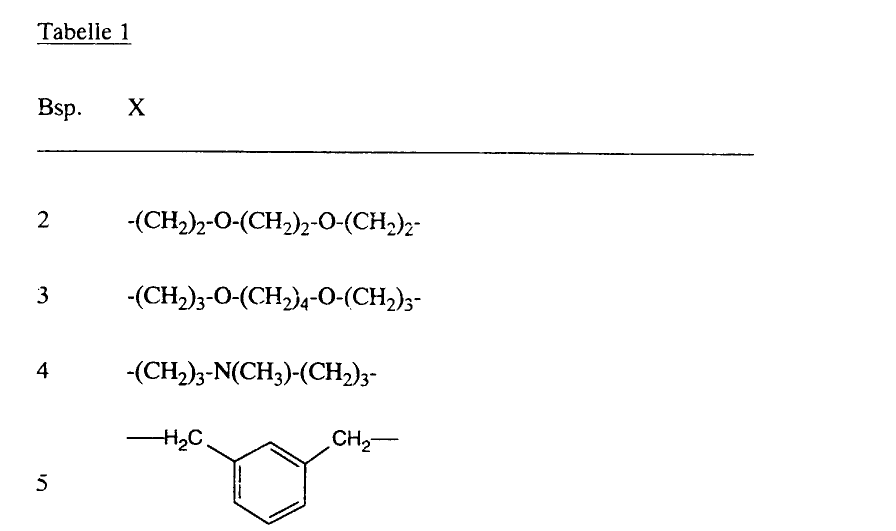

Beispiel 6: 153,24 Teile Neopentyldiamin werden in 350 Teilen Wasser bei einer Temperatur von 50°C gelöst und mit 1,25 Teilen Kupfer(I)-chlorid, 21 Teilen Lithiumhydroxid-Monohydrat und 191 Teilen des Natriumsalzes von 1-Amino-4-Bromanthrachinon-2-sulfonsäure versetzt. Die erhaltene Suspension wird auf eine Temperatur von 70°C erwärmt und nach Zugabe von 200 Teilen Wasser ca. 4 Stunden bei dieser Temperatur gerührt. Anschliessend werden 0,5 Teile Kupfer(I)-chlorid zugegeben und es wird ca. 2 Stunden bei einer Temperatur von 80°C gerührt. Der pH wird durch Zugabe von Salzsäure (32%) auf einen Wert von ca. 7,6 gestellt, die Reaktionsmischung auf Raumtemperatur abgekühlt und über Nacht stehen gelassen. Danach wird 30 Minuten bei Raumtemperatur und einem pH-Wert von 8 gerührt und die Reaktionsmischung durch Zugabe von Salzsäure (32%) auf einen pH-Wert von 3,8 gestellt. Das auskristallisierte Reaktionsprodukt wird abgenutscht und im Vakuum bei einer Temperatur von 55°C getrocknet. Man erhält ein Natrium/Lithium-Mischsalz einer Verbindung, welche in Form der freien Säure der Verbindung der Formel 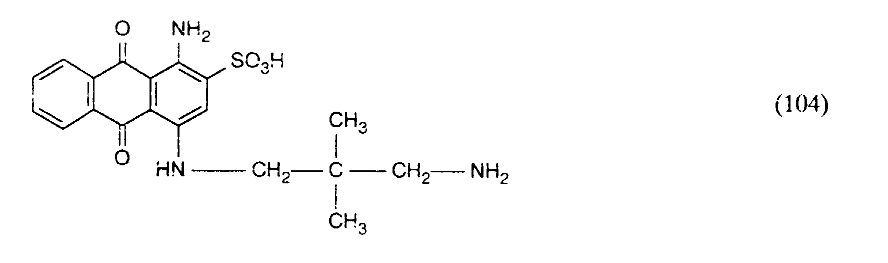 entspricht.

4,34 Teile der wie oben angegeben erhältlichen Verbindung der Formel (104) werden in 50 Teilen Wasser und 30 Teilen Methoxyäthan-2-ol gelöst. Innerhalb von 2 Stunden werden bei einer Temperatur von 85°C portionsweise insgesamt 8,6 Teile der Verbindung der Formel 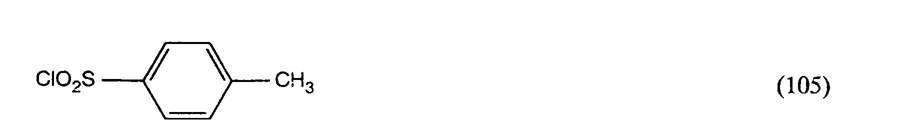 zugegeben. Der pH wird hierbei edurch Zugabe wässriger Natriumhydroxidlösung (15%) bei einem Wert von 7 bis 7,5 gehalten. Anschliessend werden 10% Natriumchlorid, bezogen auf die Reaktionsmischung, zugegeben und es wird 30 Minuten gerührt. Nach Filtration, Nachwaschen mit einer wässrigen Natriumchloridlösung und Trocknung bei einer Temperatur von 50 bis 60°C erhält man einen Farbstoff, der in Form der freien Säure der Verbindung der Formel 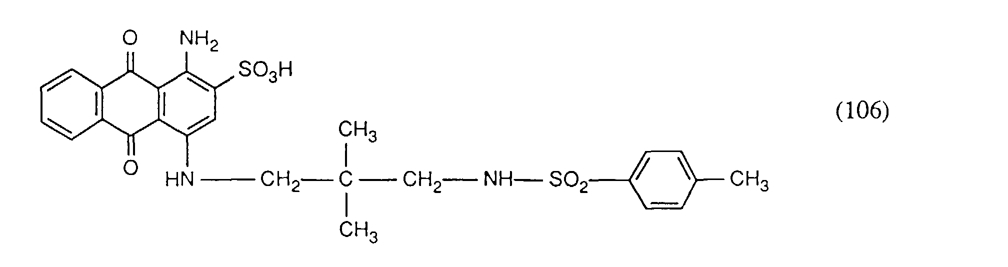 entspricht. Der erhaltene Farbstoff der Formel (106) färbt Wolle und synthetisches Polyamidfasermaterial in blauen Farbtönen.

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 1 beträgt 0,7% bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

Man erhält ein blau gefärbtes Polyamid-6,6-Gewebe, das eine reine Nuance und gute Gesamtechtheiten aufweist.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 5 beträgt 1%, bezogen auf das Fasergewicht. Die Färbedauer bei einer Temperatur von 98°C beträgt 30 bis 90 Minuten. Das gefärbte Polyamid-6,6-Gewebe wird anschliessend herausgenommen und wie üblich gewaschen und getrocknet.

Man erhält ein blau gefärbtes Polyamid-6,6-Gewebe, das eine reine Nuance und gute Gesamtechtheiten aufweist.

### Färbevorschrift III

Man färbt 10 Teile Wollstück in 500 Teilen einer wässrigen Flotte. Bezogen auf das Fasergewicht betragen die Anteile an Farbstoff 0,45% gemäss Beispiel 5, an Glaubersalz kalz. 5% und 80%-iger Essigsäure 2%. Die Färbedauer bei einer Temperatur von 98°C beträgt 30 bis 60 Minuten. Das blau gefärbte, wie üblich gewaschene und getrocknete Wollstück weist gute Allgemeinechtheiten auf.

## Patentansprüche

1. Anthrachinonfarbstoffe der Formel 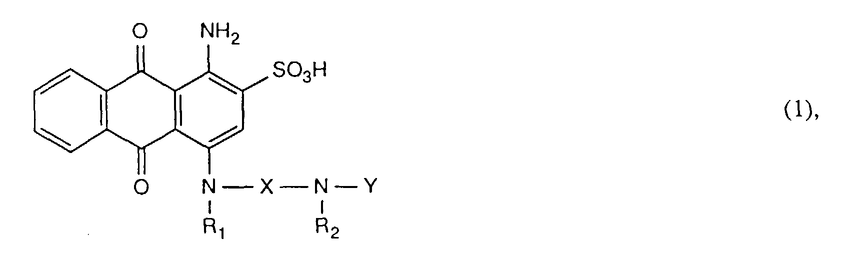 worin
R₁ und R₂ unabhängig voneinander Wasserstoff oder C₁-C₄-Alkyl sind,
X ein C₂-C₂₂-Alkylenrest ist, welcher durch 1, 2 oder 3 Glieder aus der Gruppe -NH-, -N(CH₃)- oder -O- unterbrochen ist und unsubstituiert oder durch Hydroxyl, Sulfo oder Sulfato substituiert ist; oder
ein Rest der Formel -CH₂-C(CH₃)₂-CH₂-; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylen-C₁-C₄-alkylenrest ist, und
Y ein Rest der Formel 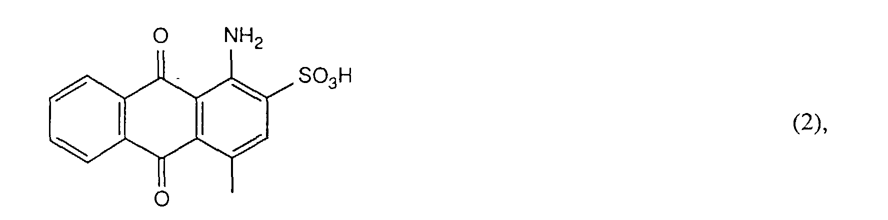 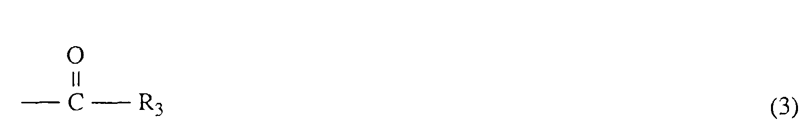 oder
―SO₂―R₄ (4)
ist, wobei R₃ und R₄ unabhängig voneinander C₁-C₄-Alkyl oder gegebenenfalls substituiertes Phenyl oder Naphthyl bedeuten.

2. Anthrachinonfarbstoffe gemäss Anspruch 1, worin R₁ und R₂ Wasserstoff sind.

3. Anthrachinonfarbstoffe gemäss einem der Ansprüche 1 und 2, worin
X ein C₄-C₁₂-Alkylenrest ist, welcher durch 1, 2 oder 3 Glieder aus der Gruppe -NH-, -N(CH₃)- oder -O- unterbrochen ist; oder
ein gegebenenfalls im Phenylenring durch C₁-C₄-Alkyl, C₁-C₄-Alkoxy, C₂-C₄-Alkanoylamino, Sulfo, Halogen oder Carboxy substituierter C₁-C₄-Alkylen-phenylen-C₁-C₄-alkylenrest ist.

4. Anthrachinonfarbstoffe gemäss einem der Ansprüche 1 bis 3, worin
X ein gegebenenfalls im Phenylenring durch C₁-C₄-Alkyl, C₁-C₄-Alkoxy, C₂-C₄-Alkanoylamino, Sulfo, Halogen oder Carboxy substituierter Methylen-phenylen-methylenrest ist.

5. Anthrachinonfarbstoffe gemäss einem der Ansprüche 1 bis 4, worin
X ein Methylen-phenylen-methylenrest ist.

6. Anthrachinonfarbstoffe gemäss einem der Ansprüche 1 bis 5, worin
R₃ und R₄ unabhängig voneinander C₁-C₄-Alkyl oder gegebenenfalls durch C₁-C₄-Alkyl, C₁-C₄-Alkoxy, C₂-C₄-Alkanoylamino, Sulfo, Halogen oder Carboxy substituiertes Phenyl bedeuten.

7. Anthrachinonfarbstoffe gemäss einem der Ansprüche 1 bis 6, worin
Y ein Rest der Formel (2) ist.

8. Anthrachinonfarbstoffe gemäss Anspruch 1, worin
R₁ und R₂ Wasserstoff sind,
Y ein Rest der Formel (2) ist und
X ein C₄-C₁₂-Alkylenrest ist, welcher durch 1, 2 oder 3 Glieder aus der Gruppe -NH-, -N(CH₃)- oder -O- unterbrochen ist, oder
ein gegebenenfalls im Phenylenring durch C₁-C₄-Alkyl, C₁-C₄-Alkoxy, C₂-C₄-Alkanoylamino, Sulfo, Halogen oder Carboxy substituierter Methylen-phenylen-methylenrest ist.

9. Anthrachinonfarbstoffe gemäss Anspruch 1, worin
R₁ und R₂ Wasserstoff sind,
Y ein Rest der Formel (2) und
X ein Methylen-phenylen-methylenrest ist.

10. Verfahren zur Herstellung von Anthrachinonfarbstoffen gemäss Anspruch 1, dadurch gekennzeichnet, dass man eine Verbindung der Formel 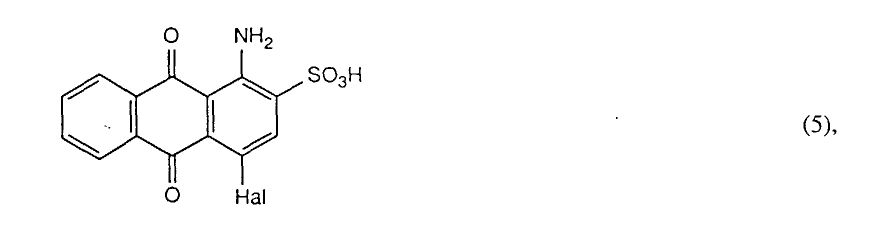 worin Hal Halogen bedeutet, mit einem Amin der Formel 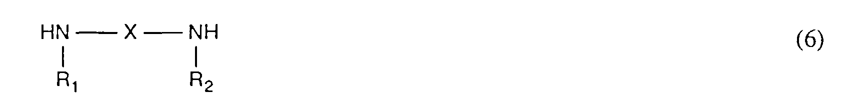 umsetzt, und, falls Y ein Rest der Formel (3) oder (4) ist, das erhaltene Produkt anschliessend mit einer den Rest der Formel (3) oder (4) einführenden Verbindung umsetzt, wobei R₁, R₂, X und Y die in Anspruch 1 angegebenen Bedeutungen haben.

11. Verwendung der Anthrachinonfarbstoffe gemäss den Ansprüchen 1 bis 9 bzw. der gemäss Anspruch 10 erhaltenen Anthrachinonfarbstoffe zum Färben oder Bedrucken von stickstoffhaltigen oder hydroxygruppenhaltigen Fasermaterialien.

12. Verwendung gemäss Anspruch 11 zum Färben oder Bedrucken von natürlichen oder synthetischen Polyamidfasermaterialien.

## Claims

1. An anthraquinone dye of formula 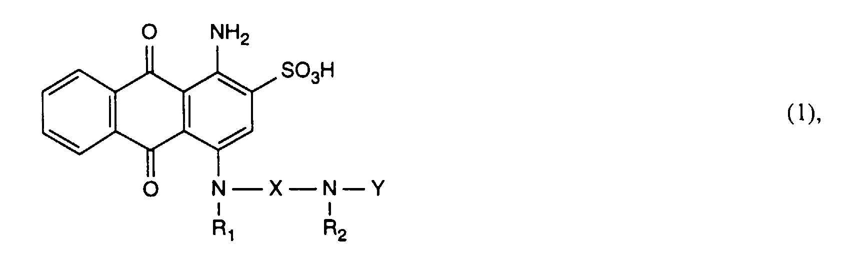 wherein
R₁ and R₂ are each independently of the other hydrogen or C₁-C₄alkyl,
X is a C₂-C₂₂alkylene radical which is interrupted by 1, 2 or 3 members selected from the group consisting of -NH-, -N(CH₃)- or -O- and which is unsubstituted or substituted by hydroxyl, sulfo or sulfato; or
a radical of formula -CH₂-C(CH₃)₂-CH₂-; or
a C₁-C₄alkylene-phenylene-C₁-C₄alkylene radical which is unsubstituted or substsituted in the phenylene ring by C₁-C₄alkyl, C₁-C₄alkoxy, C₂-C₄alkanoylamino, sulfo, halogen or carboxy, and
Y is a radical of formula 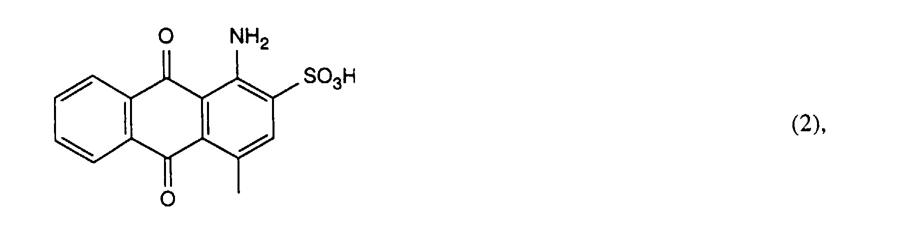 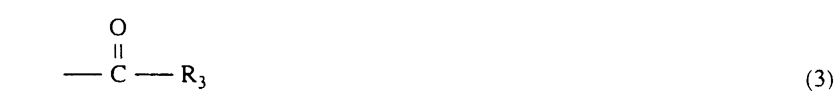 or
―SO₂―R₄ (4)
wherein R₃ and R₄ are each independently of the other C₁-C₄alkyl, or unsubstituted or substituted phenyl or naphthyl.

2. An anthraquinone dye according to claim 1, wherein R₁ and R₂ are hydrogen.

3. An anthraquinone dye according to either claim 1 or claim 2, wherein
X is a C₄-C₁₂alkylene radical which is interrupted by 1, 2 or 3 members selected from the group consisting of -NH-, -N(CH₃)- or -O-; or
a C₁-C₄alkylene-phenylene-C₁-C₄alkylene radical which is unsubstituted or substituted in the phenylene ring by C₁-C₄alkyl, C₁-C₄alkoxy, C₂-C₄alkanoylamino, sulfo, halogen or carboxy.

4. An anthraquinone dye according to any one of claims 1 to 3, wherein
X is a methylene-phenylene-methylene radical which is unsubstituted or substituted in the phenylene ring by C₁-C₄alkyl, C₁-C₄alkoxy, C₂-C₄alkanoylamino, sulfo, halogen or carboxy.

5. An anthraquinone dye according to any one of claims 1 to 4, wherein
X is a methylene-phenylene-methylene radical.

6. An anthraquinone dye according to any one of claims 1 to 5, wherein
R₃ and R₄ are each independently of the other C₁-C₄alkyl or phenyl which is unsubstituted or substituted by C₁-C₄alkyl, C₁-C₄alkoxy, C₂-C₄alkanoylamino, sulfo, halogen or carboxy.

7. An anthraquinone dye according to any one of claims 1 to 6, wherein
Y is a radical of formula (2).

8. An anthraquinone dye according to claim 1, wherein
R₁ and R₂ are hydrogen,
Y is a radical of formula (2), and
X is a C₄-C₁₂alkylene radical which is interrupted by 1, 2 or 3 members selected from the group consisting of -NH-, -N(CH₃)- or -O-, or
a methylene-phenylene-methylene radical which is unsubstituted or substituted in the phenylene ring by C₁-C₄alkyl, C₁-C₄alkoxy, C₂-C₄alkanoylamino, sulfo, halogen or carboxy.

9. An anthraquinone dye according to claim 1, wherein
R₁ and R₂ are hydrogen,
Y is a radical of formula (2), and
X is a methylene-phenylene-methylene radical.

10. A process for the preparation of an anthraquinone dye according to claim 1, which comprises reacting a compound of formula 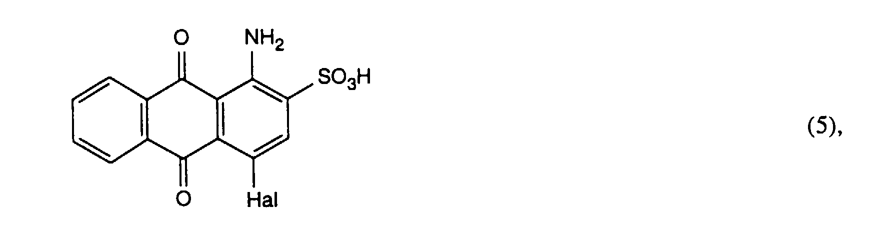 wherein Hal is halogen, with an amine of formula 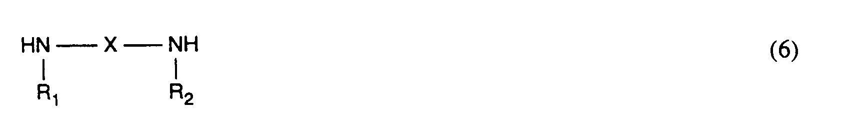 and, if Y is a radical of formula (3) or (4), reacting the product so obtained with a compound which introduces the radical of formula (3) or (4), wherein R₁, R₂, X and Y have the meanings indicated in claim 1.

11. Use of an anthraquinone dye according to any one of claims 1 to 9, or of an anthraquinone dye obtained according to claim 10, for dyeing or printing nitrogen-containing or hydroxyl group-containing fibre materials.

12. Use according to claim 11 for dyeing or printing natural or synthetic polyamide fibre materials.

## Revendications

1. Colorant d'anthraquinone de la formule 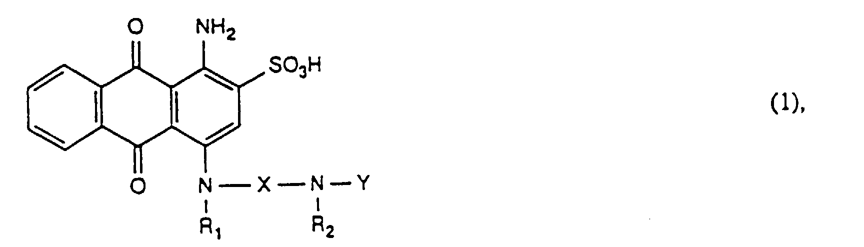 où
R₁ et R₂ sont indépendamment l'un de l'autre hydrogène ou alkyle C₁-C₄,
X est un résidu alkylène C₂-C₂₂, qui est interrompu par 1, 2 ou 3 membres du groupe -NH-, -N(CH₃)- ou -O- et est non substitué ou substitué par hydroxyle, sulfo ou sulfato; ou
un résidu de la formule -CH₂-C(CH₃)₂-CH₂- ; ou
un résidu alkylène C₁-C₄-phénylène-alkylène C₁-C₄, le cas échéant substitué dans le cycle phénylène par alkyle C₁-C₄, alcoxy C₁-C₄, alkanoylamino C₂-C₄, sulfo, halogène ou carboxy, et
Y est un résidu de la formule : 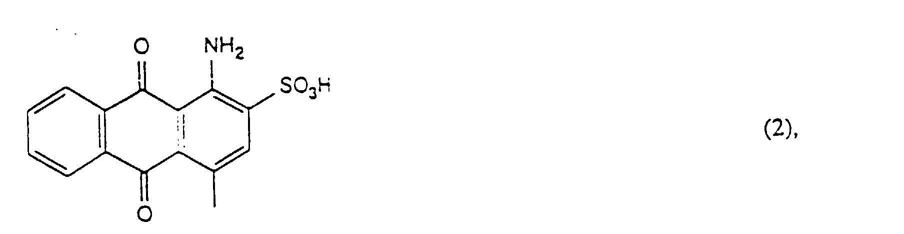 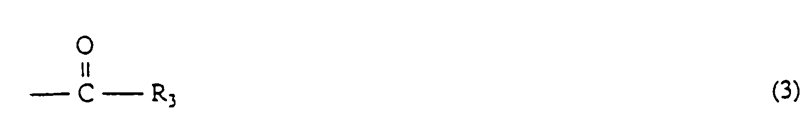 ou
―SO₂―R₄ (4)
où R₃ et R₄, indépendamment l'un de l'autre, signifient un alkyle C₁-C₄ ou phényle ou naphtyle le cas échéant substitué.

2. Colorant d'anthraquinone selon la revendication 1, où R₁ et R₂ sont de l'hydrogène.

3. Colorant d'anthraquinone selon l'une des revendications 1 et 2, où
X est un résidu alkylène C₄-C₁₂ qui est interrompu par 1,2 ou 3 membres du groupe -N(CH₃) -ou -O-; ou
un résidu alkylène C₁-C₄-phénylène-alkyléne C₁-C₄, le cas échéant substitué dans le cycle phénylène par alkyle C₁-C₄, alcoxy C₁-C₄, alcanoylamino C₂-C₄, sulfo, halogène ou carboxy.

4. Colorant d'anthraquinone selon l'une des revendications 1 à 3, où
X est un résidu méthylène-phénylène-méthylène, le cas échéant substitué dans le cycle phénylène par alkyle C₁-C₄, alcoxy C₁-C₄, alcanoylamino C₂-C₄, sulfo, halogène ou carboxy.

5. Colorant d'anthraquinone selon l'une des revendications 1 à 4, où X est un résidu méthylène-phénylène-méthylène.

6. Colorant d'anthraquinone selon l'une des revendications 1 à 5 où
R₃ et R₄ signifient, indépendamment l'un de l'autre, alkyle C₁-C₄ ou phényle le cas échéant substitué par alkyle C₁-C₄, alcoxy C₁-C₄, alcanoylamino C₂-C₄, sulfo, halogène ou carboxy.

7. Colorant d'anthraquinone selon l'une des revendications 1 à 6, où Y est un résidu de la formule (2).

8. Colorant d'anthraquinone selon la revendication 1, où
R₁ et R₂ sont de l'hydrogène,
Y est un résidu de la formule (2), et
X est un résidu alkylène C₄-C₁₂ qui est interrompu par 1,2 ou 3 membres du groupe -N(CH₃)- ou -O-, ou
un résidu méthylène-phénylène-méthylène, le cas échéant substitué dans le cycle phénylène par alkyle C₁-C₄, alcoxy C₁-C₄, alcanoylamino C₂-C₄, sulfo, halogène ou carboxy.

9. Colorant d'anthraquinone selon la revendication 1, où
R₁ et R₂ sont de l'hydrogène,
Y est un résidu de la formule (2) et
X est un résidu méthylène-phénylène-méthylène.

10. Procédé pour la production de colorants d'anthraquinone selon la revendication 1, caractérisé en ce que l'on fait réagir un composé de la formule 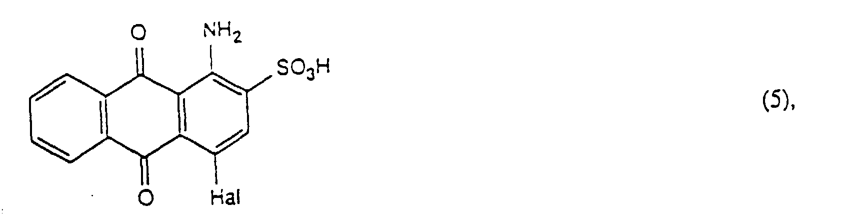 où Hal signifie halogène, avec une amine de la formule 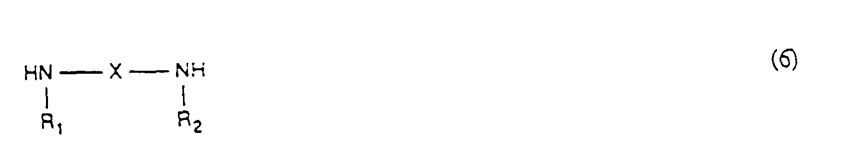 et, dans le cas où Y est un résidu de la formule (3) ou (4), le produit obtenu est ensuite mis à réagir avec un composé introduisant un résidu de la formule (3) ou (4), où R₁, R₂, X et Y ont les significations indiquées à la revendication 1.

11. Utilisation des colorants d'anthraquinone selon les revendications 1 à 9, où respectivement des colorants d'anthraquinone obtenus selon la revendication 10 pour la teinture ou l'impression de matières fibreuses contenant de l'azote ou contenant des groupes hydroxy.

12. Utilisation selon la revendication 11 pour la teinture ou l'impression de matières fibreuses de polyamide naturel ou synthétique.
